# EUROPÄISCHE PATENTSCHRIFT

(11) **EP 4 182 612 B1**
(45) Veröffentlichungstag und Bekanntmachung des Hinweises auf die Patenterteilung: **09.04.2025**
(21) Anmeldenummer: 21739096.2
(22) Anmeldetag: 01.07.2021
(51) Int. Cl.: F24S 20/20, F24S 20/30, F24S 60/00, F24S 80/20, F24S 80/70

(54) **SOLARSTRAHLUNGSRECEIVER SOWIE REAKTORSYSTEM MIT SOLARSTRAHLUNGSRECEIVER**
SOLAR RADIATION RECEIVER AND REACTOR SYSTEM WITH SOLAR RADIATION RECEIVER
RÉCEPTEUR DE RAYONNEMENT SOLAIRE ET SYSTÈME DE RÉACTEUR AVEC RÉCEPTEUR DE RAYONNEMENT SOLAIRE

(30) Priorität: 15.07.2020 DE 102020118651
(43) Veröffentlichungstag der Anmeldung: 24.05.2023
(73) Patentinhaber: Deutsches Zentrum für Luft- und Raumfahrt e.V., 53227 Bonn (DE)
(72) Erfinder: BRENDELBERGER, Stefan, 51147 Köln (DE); HOLZEMER-ZERHUSEN, Philipp, 51147 Köln (DE)
(74) Vertreter: dompatent von Kreisler Selting Werner - Partnerschaft von Patent- und Rechtsanwälten mbB
(86) Internationale Anmeldenummer: PCT/EP2021/068130
(87) Internationale Veröffentlichungsnummer: WO 2022/012941

(56) Entgegenhaltungen:
- DE-A1- 102011 001 417
- DE-A1- 102017 200 464
- DE-A1- 102018 201 319
- US-A1- 2015 307 963
- US-A1- 2015 308 715

## Beschreibung

Die vorliegende Erfindung betrifft ein Solarstrahlungsreceiver sowie ein Reaktorsystem mit einem derartigen Solarstrahlungsreceiver.

Es ist bekannt, für die Erzeugung von Wasserstoff oder Synthesegas ein Redoxmaterial einzusetzen, wobei das Redoxmaterial in Redoxkreisprozessen zur Wasser- und CO₂-Spaltung verwendet wird. Erste Ansätze sehen dabei vor, das Redoxmaterial mittels Solarenergie zur chemischen Reduktion zu erhitzen, wobei das Redoxmaterial konzentrierte Solarstrahlung absorbiert.

Erste Konzepte sehen vor, dass zur solaren Erzeugung von Wasserstoff mittels derartiger thermochemischer Kreisprozesse ein partikelförmiges Feststoffmedium eingesetzt wird. In diesem Prozess wird das Feststoffmedium mit Hilfe von Sonnenenergie bei hohen Temperaturen über eine chemische Reaktion thermisch reduziert. Diesem wird zu einem späteren Zeitpunkt Wasserdampf zugeführt. Das Medium wird durch den Sauerstoff im Wasser oxidiert, so dass Wasserstoff entsteht. Um den Kreisprozess fortführen zu können, muss das oxidierte Medium erneut bei hohen Temperaturen reduziert werden. Bei den bekannten Kreisprozessen fallen die Partikel frei durch den Fokus der konzentrierten Solarstrahlung oder werden durch diesen bewegt. Anschließend werden die Partikel in einen Reaktor zur Durchführung der Oxidation bewegt. Derartige Verfahren haben zwar den Vorteil eines kontinuierlichen Prozesses, jedoch bestehen Probleme hinsichtlich Abriebs der Partikel, Staubbildung durch den Partikelabrieb und beim Partikeltransport.

Es gibt auch sogenannte Feststoffreceiver, in denen das Medium fest in dem Receiver verbaut ist und in einem Batch-Prozess abwechselnd reduziert und oxidiert wird. Bei derartigen Receivern entstehen Nachteile, da der Prozess nicht kontinuierlich erfolgt.

Bei den bekannten Receivern besteht grundsätzlich ferner das Problem einer fehlenden oder unzureichenden Rekuperation der Wärme zwischen dem Reduktions- und dem Oxidationsschritt.

Aus DE 10 2018 201 319 A1 ist ein System bekannt, bei dem Blöcke aus Redoxmaterial mittels einer Fördervorrichtung durch den Receiver transportiert werden. Der Transport der Blöcke durch den Receiver ist aufgrund der hohen Temperaturen problematisch. DE 10 2018 201 319 A1 offenbart somit einen Solarstrahlungsreceiver mit den Merkmalen des Oberbegriffs von Anspruch 1.

Grundsätzlich besteht ferner das Problem, Solarstrahlungsreceiver kontinuierlich mit einem die Solarstrahlung absorbierenden Feststoffmedium als Reaktionsmedium oder Wärmeträgermedium zu betreiben.

Es ist daher die Aufgabe der vorliegenden Erfindung einen Solarstrahlungsreceiver sowie ein Reaktorsystem mit einem derartigen Solarstrahlungsreceiver zu schaffen, die in vorteilhafterweise mit einem die Solarstrahlung absorbierenden Feststoffmedium als Reaktionsmedium oder Wärmeträgermedium vorzugsweise kontinuierlich betreibbar und in vorteilhafterweise für solarbetriebene Redoxkreisprozessen einsetzbar sind.

Der erfindungsgemäße Solarstrahlungsreceiver ist definiert durch die Merkmale des Anspruchs 1.

Das erfindungsgemäße Reaktorsystem ist definiert durch die Merkmale des Anspruchs 13.

Der erfindungsgemäße Solarstrahlungsreceiver weist eine Receiverkammer mit mindestens einer Strahlungsöffnung auf, durch die konzentrierte Solarstrahlung in die Receiverkammer einleitbar ist. Der erfindungsgemäße Solarstrahlungsreceiver weist ferner mindestens eine Solarabsorbervorrichtung mit mindestens einem Feststoffmediumblock auf, der an einer Transporteinrichtung befestigt ist, und mindestes eine Öffnung, durch bzw. in die die mindestens eine Solarabsorbervorrichtung eingeschoben und entnommen wird, wobei durch das Einschieben der mindestens eine Feststoffmediumblock in der Receiverkammer angeordnet wird.

Der erfindungsgemäße Solarstrahlungsreceiver ermöglicht somit in vorteilhafter Weise, dass das Feststoffmedium, das Solarstrahlung absorbieren soll, austauschbar in der Receiverkammer angeordnet werden kann. Nach der Erhitzung durch konzentrierte Solarstrahlung kann die Solarabsorbervorrichtung auf einfache Art und Weise entnommen werden und gegen eine weitere Solarabsorbervorrichtung ausgetauscht werden. Die Transporteinrichtung ist Teil der Solarabsorbervorrichtung und wird beim Einschieben bzw. Entnehmen der Solarabsorbervorrichtung mit bewegt. An der Transporteinrichtung kann beispielsweise angegriffen werden, um die Solarabsorbervorrichtung zu bewegen.

Der erfindungsgemäße Solarstrahlungsreceiver kann beispielsweise an einem Solarturm angeordnet sein, wobei die konzentrierte Solarstrahlung mittels einem oder mehrerer Heliostaten auf den Solarstrahlungsreceiver gelenkt wird.

Der Feststoffmediumblock kann beispielsweise aus einem Redoxmaterial oder einem Wärmeträgermaterial bestehen.

Das Material des Feststoffmediumblocks ist vorzugsweise porös. Dadurch können Teile konzentrierter Solarstrahlung, die auf die Solarabsorbervorrichtung in die Receiverkammer gestrahlt werden, ins Innere des Feststoffmediumblocks vordringen, so dass eine verbesserte Absorption der Solarstrahlung und somit Erwärmung des Feststoffmediumblocks erreicht werden kann. Darüber hinaus vergrößert sich durch die Porosität die Oberfläche des Feststoffmediumblocks, so dass dieses bei einem Einsatz als Reaktionsmedium, beispielsweise in einen Redoxkreislauf, eine vergrößerte Reaktionsoberfläche bietet, wodurch die Reaktionen verbessert stattfinden können.

Bei dem erfindungsgemäßen Solarstrahlungsreceiver können mehrere StrahlungsÖffnungen vorgesehen sein. Dadurch kann die Einstrahlung aus verschiedenen Richtungen (je nach Sonnenstand) verbessert werden. Wenig bzw. ungenutzte Strahlungsöffnungen könnten auch durch eine Klappe verschlossen werden, sodass die Strahlungsverluste durch diese Öffnungen verhindert werden können. Die Strahlungsöffnungen können an unterschiedlichen Seiten des Solarstrahlungsreceiver angeordnet sein, beispielsweise an der Unterseite, an der Oberseite oder an einer oder mehreren der weiteren Seiten. Die Anordnung der Strahlungsöffnungen ist insbesondere an die Lage des Solarstrahlungsreceiver in Bezug auf den oder die Heliostaten bzw. in Bezug auf die Einstrahlrichtung der konzentrierten Solarstrahlung angepasst. Beispielsweise können weitere Umlenkreflektoren vorgesehen sein, so dass auch eine Einstrahlrichtung von oben möglich ist. Vorzugsweise sind die mehreren Strahlungsöffnungen auf den den Heliostaten zugewandten Seiten des Solarstrahlungsreceiver angeordnet.

Vorzugsweise ist vorgesehen, dass der Feststoffmediumblock über eine Isolationseinrichtung mit der Transporteinrichtung verbunden ist, wodurch eine thermische Trennung der Transporteinrichtung von dem Feststoffmediumblock erfolgt, so dass die thermische Belastung der Transporteinrichtung reduziert werden kann.

Die erfindungsgemäße Solarabsorbervorrichtung weist bevorzugt einen Feststoffmediumblock aus einem Redoxmaterial auf, so dass die Solarabsorbervorrichtung in einem Redoxkreisprozess eingesetzt werden kann, wobei das Redoxmaterial in einer entsprechenden Atmosphäre, beispielsweise auch bei abgesenktem Gesamtdruck, mittels der konzentrierten Solarstrahlung erhitzt werden kann, wodurch eine Reduzierung des Redoxmaterials erfolgt. Anschließend wird die Solarabsorbervorrichtung in einen separaten Reaktor transportiert. In dem Reaktor wird beispielsweise Wasserdampf dem reduzierten Redoxmaterial zugeführt, wobei eine Spaltung des Wasserdampfes erfolgt, wodurch Wasserstoff entsteht. Auf dem Transportweg zu dem separaten Reaktor kann Wärme vom erhitzten Redoxmaterial genutzt werden, um kühleres Redoxmaterial, das zu dem Solarstrahlungsreceiver transportiert wird, vorzuwärmen (Wärmerückgewinnung).

Die erfindungsgemäße Solarabsorbervorrichtung kann jedoch auch aus einem Feststoffmediumblock aus einem anderen Material, beispielsweise einem Wärmeträgermaterial, bestehen, so dass mittels der erfindungsgemäßen Solarabsorbervorrichtung Solarwärme transportiert und beispielsweise gespeichert werden kann. Auch besteht die Möglichkeit, dass der Feststoffmediumblock aus einem anderen Material (z.B. Katalysator) besteht, welches für andere Reaktionen als Redoxreaktionen verwendet wird.

Vorzugsweise ist vorgesehen, dass der Feststoffmediumblock eine maximale Erstreckung in eine Höhenrichtung, eine maximale Erstreckung in eine Breitenrichtung und eine maximale Erstreckung in eine Längenrichtung aufweist, wobei die Höhenrichtung vertikal verläuft und die Breitenrichtung und die Längenrichtung horizontal verlaufen und die Höhenrichtung, die Breitenrichtung und die Längenrichtung orthogonal zueinander sind, wobei die maximale Erstreckung des Feststoffmediumblocks in Breitenrichtung maximal 50% der maximalen Erstreckung des Längenmediumblocks in Höhenrichtung oder in Längenrichtung beträgt. Vorzugsweise beträgt die maximale Erstreckung des Feststoffmediumblocks in Breitenrichtung zwischen 10% und 25% der maximalen Erstreckung des Feststoffmediumblocks in Höhenrichtung oder in Längenrichtung. Der Feststoffmediumblock kann daher die Form einer dicken Platte aufweisen, die aufrecht steht, wobei die maximale Erstreckung in Höhenrichtung entweder größer, gleich groß oder kleiner als die maximale Erstreckung in Längenrichtung ist. Eine derartige Form hat sich als besonders vorteilhaft herausgestellt, da der Feststoffmediumblock eine große, sich in einer vertikalen Ebene befindliche Fläche bildet, die in vorteilhafterweise mittels konzentrierter Solarstrahlung bestrahlt werden kann. Der Feststoffmediumblock kann in Breitenrichtung relativ dünn ausgestaltet sein, da in Abhängigkeit von der Porosität des Feststoffmediumblocks die konzentrierte Solarstrahlung nur bis in eine bestimmte Tiefe in Breitenrichtung in das Material des Feststoffmediumblocks eindringen kann, um dies zu erwärmen. Der Feststoffmediumblock kann eine gradierte Struktur aufweisen, die eine in eine vorgegebene Richtung abnehmende Porosität aufweist. Die vorgegebene Richtung kann beispielsweise an die Einstrahlrichtung der konzentrierten Solarstrahlung im in dem Solarstrahlungsreceiver angeordneten Zustand des Feststoffmediumblocks angepasst sein.

Vorzugsweise weist der Feststoffmediumblock eine Quaderform auf. Selbstverständlich sind auch andere Formen möglich, wie beispielsweise eine kreisrunde Scheibe oder andere Formen, wie beispielsweise Keil-, Pyramiden-, Keilstumpf oder Pyramidenstumpfformen oder ähnliche. Bei der Ausgestaltung des Feststoffmediumblocks in einer Quaderform kann insbesondere vorgesehen sein, dass der Feststoffmediumblock mit einer seiner Hauptflächen, die sich in Längen- und Breitenrichtung erstreckt auf der Transporteinrichtung befestigt ist. Die Hauptfläche, mit der der Feststoffmediumblock auf der Transporteinrichtung befestigt ist, kann in einer horizontalen Ebene angeordnet sein. Es ist auch möglich, dass die Hauptfläche gegenüber der Horizontalen geneigt und somit in einer geneigten Ebene angeordnet ist

In dem Feststoffmediumblock können sich vorzugsweise in Höhenrichtung erstreckende Elemente zur Stabilisierung eingebettet sein. Ferner können sich vorzugsweise in Breitenrichtung erstreckende Elemente eingebettet sein, die aus einem wärmeleitenden Material bestehen, wodurch der Wärmetransport innerhalb des Feststoffmediumblocks verbessert wird.

Vorzugsweise ist vorgesehen, dass die mindestens eine Strahlungsöffnung mit einer für die Solarstrahlung transparenten Scheibe verschlossen ist.

Unter einer für die Solarstrahlung transparenten Scheibe wird eine Scheibe verstanden, die für die Solarstrahlung einen hemisphärischen, solaren (AM1,5) Transmissionsgrad von mindestens 85% aufweist. Durch das Vorsehen einer transparenten Scheibe einer Strahlungsöffnung kann die Receiverkammer geschlossen sein, so dass eine gewünschte Atmosphäre in der Receiverkammer erzeugbar ist. Auf diese Weise ist die Receiverkammer in vorteilhafterweise als Reaktionskammer verwendbar. Beispielsweise kann an der Receiverkammer eine Gasabsaugung vorgesehen sein, so dass ein Unterdruck in der Receiverkammer erzeugbar ist. Es kann auch ein Spülgas zur Entfernung von Sauerstoff eingesetzt werden. Um beispielsweise das Feststoffmedium in Form eines Redoxmaterials in der Receiverkammer mittels der konzentrierten Solarstrahlung zu reduzieren, kann der freiwerdende Sauerstoff in vorteilhafterweise aus der Receiverkammer zumindest teilweise abgesaugt werden. In der Kammer herrscht somit ein niedriger Sauerstoffpartialdruck, so dass die Reduktionsreaktion begünstigt und eine erneute Oxidation des Feststoffmediums verhindert wird.

Vorzugsweise weist der erfindungsgemäße Solarstrahlungsreceiver mindestens eine Vertikaltransportvorrichtung auf, wobei die mindestens eine Öffnung der Receiverkammer nach unten gerichtet ist und die mindestens eine Vertikaltransportvorrichtung die mindestens eine Solarabsorbervorrichtung in vertikaler Richtung von unten in die Receiverkammer einschiebt und aus dieser entnimmt. Da Solarstrahlungsreceiver häufig erhöht angeordnet sind, ist ein Einschieben und Entnehmen der mindestens einen Solarabsorbervorrichtung von unten in konstruktiv einfacher Weise möglich. Darüber hinaus kann für das Einschieben und Entnehmen der Solarabsorbervorrichtung von unten eine Vertikaltransportvorrichtung verwendet werden, die einen einfachen Aufbau aufweist. Selbstverständlich kann die die mindestens eine Öffnung der Receiverkammer auch nach oben gerichtet sein, so dass die mindestens eine Vertikaltransportvorrichtung die mindestens eine Solarabsorbervorrichtung in vertikaler Richtung von oben in die Receiverkammer einschiebt und aus dieser entnimmt. Es kann auch vorgesehen sein, dass die mindestens eine Solarabsorbervorrichtung in einer schrägen Richtung, beispielsweise schräg nach oben eingeschoben wird. Ferner kann die mindestens eine Solarabsorbervorrichtung auch in horizontaler Richtung eingeschoben werden, wobei dann die mindestens eine Öffnung beispielsweise seitlich an der Receiverkammer angeordnet ist.

Grundsätzlich sind auch andere, beispielsweise mehrachsige Transportvorrichtungen möglich, beispielsweise kombinierte Vertikal- und Horizontaltransportvorrichtungen oder auch in Form eines oder mehrerer Roboterarme.

Dabei kann vorgesehen sein, dass die Transporteinrichtung der Solarabsorbervorrichtung unter dem Feststoffmediumblock angeordnet ist. Auf diese Weise kann die Vertikaltransportvorrichtung in vorteilhafter Weise an der Transporteinrichtung angreifen und ist durch die Transportvorrichtung thermisch von dem Feststoffmediumblock isoliert.

In einer bevorzugten Ausführungsform des erfindungsgemäßen Solarstrahlungsreceivers sind mehrere Öffnungen vorgesehen und mehrere Solarabsorbervorrichtungen, wobei jeweils eine Solarabsorbervorrichtung durch eine der Öffnungen in die Receiverkammer eingeschoben und aus dieser entnommen wird. Somit können gleichzeitig mehrere Solarabsorbervorrichtungen in der Receiverkammer angeordnet sein.

Dabei können auch mehrere Vertikaltransportvorrichtungen vorgesehen sein, wobei jeder Öffnung eine Vertikaltransportvorrichtung zugeordnet ist. Somit sind die einzelnen Solarabsorbervorrichtungen unabhängig voneinander durch die Öffnungen in die Receiverkammer einschiebbar und aus diesen entnehmbar. Beispielsweise können auch zwei oder mehrere Solarabsorbervorrichtungen in Bezug auf die Einstrahlungsrichtung der konzentrierten Solarstrahlung hintereinander angeordnet sein, sodass bei dem Entnehmen einer Solarabsorbervorrichtung aus der Receiverkammer bereits hinter dieser Solarabsorbervorrichtung eine Solarabsorbervorrichtung in der Kammer angeordnet ist, sodass die konzentrierte Solarstrahlung möglichst optimal genutzt wird und ein kontinuierlicher Betrieb möglich ist.

An der mindestens einen Öffnung oder an jeder Öffnung kann eine Arretiervorrichtung vorgesehen sein, die eine durch die Öffnung in die Receiverkammer eingeschobene Solarabsorbervorrichtung in der eingeschobenen Position arretiert. Dadurch kann die Solarabsorbervorrichtung in vorteilhafter Weise in der Receiverkammer gehalten werden. Darüber hinaus kann bei der Verwendung einer Vertikaltransportvorrichtung zum Einschieben der Solarabsorbervorrichtung die Vertikaltransportvorrichtung nach dem Arretieren der Solarabsorbervorrichtung durch die Arretiervorrichtung abgesenkt werden. Während des Erhitzens der Solarabsorbervorrichtung ist somit die Vertikaltransportvorrichtung von dieser getrennt, wodurch die thermische Belastung der Vertikaltransportvorrichtung reduziert werden kann.

Vorzugsweise ist vorgesehen, dass die Arretiervorrichtung zur Arretierung an der Transporteinrichtung angreift.

In einer bevorzugten Ausführungsform ist vorgesehen, dass die mindestens eine Öffnung eine an die Form der Transporteinrichtung angepasste Form aufweist. Dadurch kann sichergestellt werden, dass in der eingeschobenen Position der Solarabsorbervorrichtung nur ein geringer Spalt zwischen der Transporteinrichtung und den Rändern der Öffnung verbleibt, sodass die an dieser Stelle entstehenden Verluste geringgehalten werden können.

Vorzugsweise ist vorgesehen, dass die Transporteinrichtung der Solarabsorbervorrichtung einen seitlich über den Feststoffmediumblock vorstehenden Plattenabschnitt aufweist, die mindestens eine Öffnung durch einen Öffnungsrand begrenzt ist, der durch eine Receiverkammerwandung gebildet ist, wobei in der in die Receiverkammer eingeschobenen Position der Solarabsorbervorrichtung der vorstehende Plattenabschnitt an dem Öffnungsrand anliegt. Durch den Plattenabschnitt, der an dem Öffnungsrand anliegt, kann die Position der Solarabsorbervorrichtung vorgegeben werden, sodass sichergestellt ist, dass die Solarabsorbervorrichtung beim Einschieben in die Receiverkammer in der richtigen Position angeordnet ist.

Ferner kann vorgesehen sein, dass die Arretiervorrichtung zur Arretierung den Plattenabschnitt hintergreift.

Insbesondere kann vorgesehen sein, dass der Plattenabschnitt umlaufend ausgebildet ist. Dadurch kann der Plattenabschnitt über den gesamten Umfang an dem Öffnungsrand anliegen und in vorteilhafter Weise die Öffnung bei in die Öffnung eingeschobener Solarabsorbervorrichtung abdichten.

Die Erfindung kann in vorteilhafter Weise vorsehen, dass die mindestens eine Öffnung einen Dichtungsverschluss aufweist, der in die Öffnung eingesetzt ist, wobei beim Einschieben einer der Solarabsorbervorrichtungen in die Öffnung der Dichtungsverschluss entfernt wird, wobei die Solarabsorbervorrichtung den Dichtungsverschluss aus der Öffnung drückt.

Es kann auch vorgesehen sein, dass die Solarabsorbervorrichtung den Dichtungsverschluss öffnet. Dabei kann der Dichtungsverschluss als eine Klappe oder Schleuse ausgebildet sein. Auch kann der Dichtungsverschluss eine Vorspannung, beispielsweise über eine Feder aufweisen, so dass der Dichtungsverschluss bei herausziehen der Solarabsorbervorrichtungen selbsttätig schließt. Der Dichtungsverschluss kann auch unabhängig von der Solarabsorbervorrichtung betätigt werden und beispielsweise als Klappe oder Schleuse ausgebildet sein. Beispielsweise kann ein separater Öffnungsmechanismus mit einer Antriebsvorrichtung für den Dichtungsverschluss vorgesehen sein.

Über den Dichtungsverschluss kann somit sichergestellt werden, dass in einem Zustand, in dem keine Solarabsorbervorrichtung in die Öffnung eingesetzt ist, die Öffnung abdichtend verschlossen ist um Wärmeverlust und den Gasaustausch mit der Umgebung zu vermeiden.

Die mindestens eine Solarabsorbervorrichtung kann einen Zentriervorsprung und der Dichtungsverschluss eine Zentrieraussparung aufweisen, wobei der Zentriervorsprung an die Zentrieraussparung angepasst ist. Beim Einschieben der Solarabsorbervorrichtung in die Öffnung kann der Zentriervorsprung somit in die Zentrieraussparung eingeschoben werden. Über den Zentriervorsprung und die Zentrieraussparung kann somit der Dichtungsverschluss beim Herausdrücken aus der Öffnung in vorteilhafter Weise an der Solarabsorbervorrichtung gehalten werden.

Es kann vorgesehen sein, dass in der Receiverkammer der mindestens einen Öffnung gegenüberliegend mindestens eine Aussparung angeordnet ist, wobei die Solarabsorbervorrichtung beim Einschieben in die Receiverkammer den Dichtungsverschluss in die Aussparung schiebt.

In der in die Receiverkammer eingeschobenen Position hält die Solarabsorbervorrichtung somit den Dichtungsverschluss. Beim Entnehmen der Solarabsorbervorrichtung aus der Receiverkammer wird der Dichtungsverschluss durch die Solarabsorbervorrichtung wieder zurück in die Öffnung geführt und kann auf einfache Art und Weise, sobald er in der in der Öffnung eingesetzten Position ist, von der Solarabsorbervorrichtung gelöst werden.

Die Ausgestaltung des erfindungsgemäßen Solarstrahlungsreceivers mit dem Dichtungsverschluss, der durch die Solarabsorbervorrichtung betätigt wird, ist in besonders vorteilhafter Weise verwirklichbar, wenn die Solarabsorbervorrichtung von unten durch die Öffnung in die Receiverkammer eingeschoben wird, da dann der Dichtungsverschluss oben auf der Solarabsorbervorrichtung aufsitzen kann.

In einer bevorzugten Ausführungsform der Erfindung ist vorgesehen, dass der Dichtungsverschluss einen sich verjüngenden Querschnitt aufweist, wobei schräg verlaufende Umfangswände gebildet sind, die im in die Öffnung eingesetzten Zustand des Dichtungsverschlusses an Begrenzungswänden der Öffnung anliegen.

Mit anderen Worten bildet der Dichtungsverschluss Einführschrägen, sodass der Dichtungsverschluss beim Einsetzen in die Öffnung über die schräg verlaufenden Umfangswände in vorteilhafter Weise in Position gleitet.

Vorzugsweise ist vorgesehen, dass eine Horizontaltransportvorrichtung die mindestens eine Solarabsorbervorrichtung zu der Vertikaltransportvorrichtung transportiert. Über die Horizontaltransportvorrichtung kann die Solarabsorbervorrichtung nach dem Erhitzen und Absenken durch die Vertikaltransportvorrichtung auch von dieser wieder entnommen werden.

Durch das Vorsehen einer Horizontaltransportvorrichtung, die separat von der Vertikaltransportvorrichtung ausgestaltet ist, können die Transportvorrichtungen, die die Solarabsorbervorrichtung zu dem Solarstrahlungsreceiver transportieren und von diesem weg transportieren, konstruktiv auf einfache Art und Weise ausgestaltet werden. Dadurch kann die Anzahl der bewegten Teile, die im Bereich des Solarstrahlungsreceivers und durch die Solarabsorbervorrichtungen hohen Temperaturen ausgesetzt sind, geringgehalten werden.

Anstelle der Horizontaltransportvorrichtung ist auch eine alternative Transportvorrichtung möglich, die die Solarabsorbervorrichtung auch mehrachsig transportieren kann, beispielsweise ein Roboterarm.

Darüber hinaus kann der Feststoffmediumblock quer zu einer Einschubrichtung in die Receiverkammer verlaufende Sperrschichten aufweisen, die einen Gastransport innerhalb des Feststoffmediumblocks in Einschubrichtung unterdrückt. Die Sperrschichten können sich beispielsweise quer zu der Höhenrichtung erstrecken. Beispielsweise kann ein schichtweiser Aufbau vorgesehen sein, bei dem sich nichtporöse Schichten mit porösen Schichten abwechseln um den Gastransport beim Einschieben des Feststoffmediumblocks in die Receiverkammer zu behindern. Eine Dicke der porösen Schichten kann dabei an die Breite der Receiverwandung an der Öffnung angepasst sein um einen direkte Gastransport in und aus der Receiverkammer zu vermeiden.

Die Erfindung betrifft ferner ein Reaktorsystem mit einem erfindungsgemäßen Solarstrahlungsreceiver und mit einer Reaktorkammer. Dabei kann vorzugsweise vorgesehen sein, dass mindestens eine zweite Vertikaltransportvorrichtung die mindestens eine Solarabsorbervorrichtung in die Reaktorkammer in vertikaler Richtung einschiebt und aus dieser entnimmt. Da auch die Reaktorkammer, in der die Oxidierung des Redoxmaterials der Solarabsorbervorrichtung zur Herstellung von Wasserstoff erfolgt, gegenüber der Umgebung möglichst vorteilhaft abgedichtet sein sollte, ist das Einschieben der Solarabsorbervorrichtung von unten von besonderem Vorteil. Insbesondere kann die Reaktorkammer bezüglich des Einschubmechanismus ähnlich zu dem erfindungsgemäßen Solarstrahlungsreceiver ausgebildet sein, sodass beispielsweise die Transporteinrichtung nach dem Einschieben in die Reaktorkammer dichtend an der Öffnung anliegt oder auch, dass ein Dichtungsverschluss für die Öffnung vorgesehen ist.

Es kann auch vorgesehen sein, dass die Reaktorkammer an den Solarstrahlungsreceiver anschließend angeordnet ist, wobei die mindestens eine Solarabsorbervorrichtung aus dem Solarstrahlungsreceiver direkt in die Reaktorkammer transportiert wird. Beispielsweise kann die Reaktorkammer unterhalb oder oberhalb des Solarstrahlungsreceivers angeordnet sein. Zwischen dem Solarstrahlungsreceiver und der Reaktorkammer kann auch eine Zwischenstufe für eine Wärmerückgewinnung vorgesehen sein, in der die Solarabsorbervorrichtung abgekühlt werden und Wärmeenergie zur Wärmerückgewinnung auf andere Solarabsorbervorrichtungen oder beispielsweise einen Wärmespeicher übertragen.

Dabei kann die Transporteinrichtung eine Dichtung aufweisen, die je nach Position der Solarabsorbervorrichtung die Reaktorkammer oder die Receiverkammer abdichtet. Zusätzlich kann an einer der Transporteinrichtung gegenüberliegenden Seite des Feststoffmediumblocks eine weitere Dichtung angeordnet sein, die im in die Reaktorkammer eingefahrener Stellung des Feststoffmediumblocks eine Abdichtung der Reaktorkammer gegenüber der Receiverkammer sicherstellt. Grundsätzlich können auch entsprechende Dichtungen an der Receiverkammer und/oder Reaktorkammer vorgesehen sein. Es können auch aktive Dichtungen verwendet werden. Beispielsweise kann die mindestens eine Öffnung die Receiverkammer und die Reaktorkammer verbinden, wobei eine Dichtung als eine Art Schleuse an der Öffnung angeordnet ist. Wenn der Feststoffmediumblock in die Reaktorkammer verschoben ist, kann diese dann beispielsweise die Öffnung vollständig verschließen.

In einem Ausführungsbeispiel weist die Solarabsorbervorrichtung zwei übereinander angeordnete Feststoffblöcke auf. Oberhalb und unterhalb der Receiverkammer sind jeweils eine Reaktorkammer angeordnet, die zueinander ausgerichtet sind und die den Feststoffblöcken zugeordnet sind. Mittels einer Transporteinrichtung werden die Feststoffblöcke verschoben, so dass stets ein Feststoffblock in der Receiverkammer angeordnet ist und ein Feststoffblock alternierend in einer der Reaktorkammern. Zwischen den Feststoffblöcken kann eine Verbindungsvorrichtung angeordnet sein. Mittels der Verbindungsvorrichtung kann auch eine Abdichtung an den Öffnungen der Receiverkammer erfolgen.

An dem Solarstrahlungsreceiver können auch mehrere der Receiverkammern vorgesehen sein, die jeweils paarweise mehreren Solarabsorbervorrichtungen mit jeweils zwei übereinander angeordnete Feststoffblöcken zugeordnet sind.

Die zuvor beschriebene Ausführungsform mit einer oder mehrerer Solarabsorbervorrichtungen mit zwei übereinander angeordnete Feststoffblöcken ist in einer vertikalen Anordnung beschrieben. Grundsätzlich ist auch eine horizontale Anordnung möglich, bei der die Reaktorkammern seitlich neben der Receiverkammer angeordnet sind und in horizontaler Richtung zueinander ausgerichtet sind. Die entsprechende Solarabsorbervorrichtung bzw. Solarabsorbervorrichtungen ist bzw. sind in diesem Fall in einer liegenden Anordnung mit nebeneinander angeordneten Feststoffblöcken ausgebildet. Auch sind Varianten denkbar, bei denen die Transportrichtung der Solarabsorbervorrichtung(en) schräg, d.h. gegenüber der Vertikalen geneigt, verlaufen, wobei dann die Position der Reaktorkammern entsprechend angepasst ist.

Das erfindungsgemäße Reaktorsystem kann auch einen Solarabsorbervorrichtungsspeicher zur Aufnahme mehrerer Solarabsorbervorrichtungen aufweisen. Beispielsweise können mittels einer weiteren Transportvorrichtung die Solarabsorbervorrichtungen zu dem Solarabsorbervorrichtungsspeicher transportiert und von diesem abtransportiert werden.

In dem Solarabsorbervorrichtungsspeicher können die Solarabsorbervorrichtungen vorgehalten und zwischengelagert werden. Es kann auch vorgesehen sein, dass Solarabsorbervorrichtungen mit Feststoffmediumblöcken aus unterschiedlichem Material und/oder mit unterschiedlicher Geometrie gelagert werden. Bei der Verwendung von Feststoffmediumblöcken aus einem Redoxmaterial können diese sich beispielsweise hinsichtlich ihrer Dicke, ihrer Dichte oder dem zum Einsatz kommenden reaktiven Material unterscheiden. Je nach Betriebsweise, die sich beispielsweise an Einstrahlbedingungen orientieren kann, können dann unterschiedliche Solarabsorbervorrichtungen eingesetzt werden. Bei dem erfindungsgemäßen Reaktorsystem kann auch die im Betrieb verwendete Gesamtanzahl an Solarabsorbervorrichtungen variieren. Durch den Solarabsorbervorrichtungsspeicher können somit eine unterschiedliche Anzahl von nicht genutzten Solarabsorbervorrichtungen zwischengelagert werden. Der Solarabsorbervorrichtungsspeicher ermöglicht auch einen vereinfachten Austausch abgenutzter Solarabsorbervorrichtungen, ohne den Betrieb des Reaktorsystems zu stören.

Vorzugsweise weist das erfindungsgemäße Reaktorsystem mindestens eine dritte Vertikaltransportvorrichtung auf, die die Solarabsorbervorrichtungen in den Solarabsorbervorrichtungsspeicher in vertikaler Richtung einschiebt und aus diesem entnimmt.

Bei dem erfindungsgemäßen Reaktorsystem kann ferner ein Wärmeübertragungssystem mit einer Wärmeübertragungskammer vorgesehen sein. Die Wärmeübertragungskammer kann eine Eintrittsöffnung und eine Austrittsöffnung aufweisen, wobei die Solarabsorbervorrichtungen in zwei Reihen gegenläufig durch die Wärmeübertragungskammer transportiert werden.

Somit können kältere Solarabsorbervorrichtungen, die zu dem Solarstrahlungsreceiver transportiert werden, durch mittels Solarenergie bereits erhitzte Solarabsorbervorrichtungen vorgewärmt werden. Durch den gegenläufigen Betrieb in zwei Reihen kann eine Wärmeübertragung im Gegenstromprinzip erfolgen. Dabei kann die Wärmeübertragung direkt oder indirekt, beispielsweise über ein Wärmeträgerfluid oder eine Wand, erfolgen.

Bei dem erfindungsgemäßen Reaktorsystem kann auch vorgesehen sein, dass Horizontaltransportvorrichtungen die mindestens eine Vertikaltransportvorrichtung, die mindestens eine zweite Vertikaltransportvorrichtung und die mindestens eine dritte Vertikaltransportvorrichtung verbinden.

Die Verwendung eines Transportsystems für das erfindungsgemäße Reaktorsystem, das aus reinen Vertikaltransportsystemen und reinen Horizontaltransportsystemen besteht, hat sich als besonders vorteilhaft herausgestellt.

Im Folgenden wird die vorliegende Erfindung unter Bezugnahme auf die nachfolgenden Figuren näher erläutert. Es zeigen:
- Figuren 1a-1c: schematische Schnittdarstellungen eines erfindungsgemä-ßen Solarstrahlungsreceivers beim Einschieben einer Solarabsorbervorrichtung,
- Figuren 2a und 2b: unterschiedliche Ansichten der Solarabsorbervorrichtung,
- Figuren 3a-3c: unterschiedliche Anordnungen von erfindungsgemäßen Solarabsorbervorrichtungen in einem Solarstrahlungsreceiver,
- Figuren 4a-4d: schematische Darstellungen einer Anordnung von Solarabsorbervorrichtungen in einem Solarstrahlungsreceiver mit dazugehörigen Vertikaltransportvorrichtungen und Horizontaltransportvorrichtungen,
- Figur 5: eine Prinzipdarstellung des erfindungsgemäßen Reaktorsystems,
- Figuren 6a-6c: schematische Darstellungen einer zweiten Ausführungsform eines erfindungsgemäßen Solarstrahlungsreceivers, und
- Figuren 7a-7c: schematische Darstellungen einer dritten Ausführungsform eines erfindungsgemäßen Solarstrahlungsreceivers

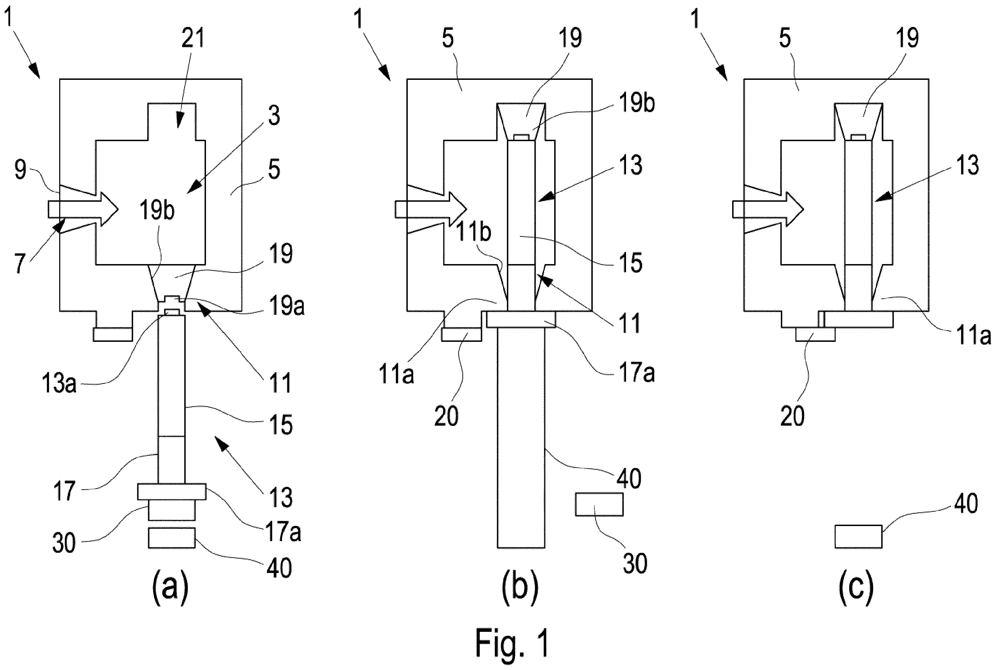

In den Figuren 1a-1c ist ein erfindungsgemäßer Solarstrahlungsreceiver 1 schematisch in einer Schnittdarstellung gezeigt. Der Solarstrahlungsreceiver 1 weist eine Receiverkammer 3 auf, die von einer Receiverkammerwandung 5 umgeben ist. Die Receiverkammerwandung 5 bildet eine thermische Isolierung der Receiverkammer 3.

Die Receiverkammer 3 weist eine Strahlungsöffnung 7 auf, durch die konzentrierte Solarstrahlung (in Figuren durch einen dicken Pfeil dargestellt) in die Receiverkammer 3 einleitbar ist. Die Strahlungsöffnung 7 ist mit einer für Solarstrahlung transparenten Scheibe 9 verschlossen, sodass in der Receiverkammer 3 eine gewünschte Atmosphäre erzeugbar ist.

An ihrem unteren Ende weist die Receiverkammer 3 eine Öffnung 11 auf, durch die eine Solarabsorbervorrichtung 13 in die Receiverkammer 3 geschoben werden kann.

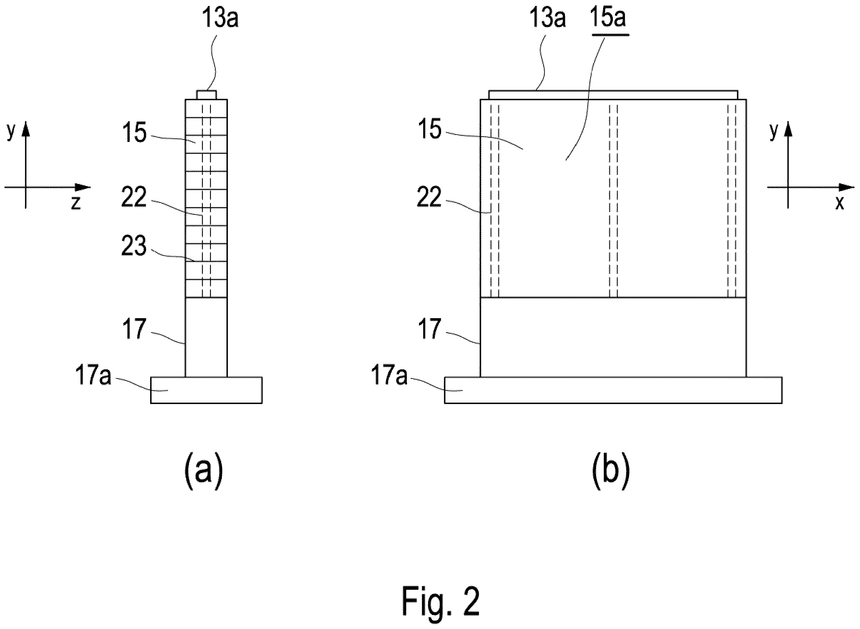

Die Solarabsorbervorrichtung 13 weist, wie am besten aus den Figuren 2a und 2b ersichtlich ist, einen Feststoffmediumblock 15 auf, der auf einer Transporteinrichtung 17 befestigt ist. Die Solarabsorbervorrichtung 13 weist aber eine Isolierung auf, die den Feststoffmediumblock 15 thermisch von der Transporteinrichtung 17 isoliert.

In der Figur 1a ist die Solarabsorbervorrichtung 13 kurz vor dem Einschieben in die Receiverkammer 3 dargestellt. Die Öffnung 11 ist durch einen Dichtungsverschluss 19 verschlossen. Der Dichtungsverschluss 19 weist an seinem unteren Ende eine Zentrieraussparung 19a auf. Die Solarabsorbervorrichtung 13 weist an ihrem oberen Ende einen an die Zentrieraussparung 19a angepassten Zentriervorsprung 13a auf. Mittels einer Horizontaltransportvorrichtung 30 wird die Solarabsorbervorrichtung 13 unterhalb der Öffnung 11 positioniert. Anschließend wird mittels einer Vertikaltransportvorrichtung 40 die Solarabsorbervorrichtung 13 in die Receiverkammer 3 in vertikaler Richtung befördert, wie aus Figur 1b ersichtlich ist. Dabei wird der Zentriervorsprung 13a der Solarabsorbervorrichtung 13 in die Zentrieraussparung 19a des Dichtungsverschlusses 19 eingeführt, sodass der Dichtungsverschluss 19 oben auf der Solarabsorbervorrichtung 13 aufsitzen und in dieser Position gehalten werden kann.

Bei der vertikalen Bewegung der Solarabsorbervorrichtung 13 wird der Dichtungsverschluss 19 nach oben aus der Öffnung 11 gedrückt.

Die Receiverkammer 3 weist ferner eine Aussparung 21 auf, in die der Dichtungsverschluss 19 nach dem Einfahren der Solarabsorbervorrichtung 13 in die Receiverkammer 3 eingeschoben werden kann.

Der Dichtungsverschluss 19 weist einen sich nach unten verjüngenden Querschnitt auf, wobei schräg verlaufende Umfangswände 19b gebildet sind. Im in die Öffnung 11 eingesetzten Zustand liegen die schräg verlaufenden Umfangswände 19b an Begrenzungswänden 11b der Öffnung 11 an, sodass eine vorteilhafte Abdichtung erfolgt. Über die schräg verlaufenden Umfangswände wird darüber hinaus sichergestellt, dass beim Entnehmen der Solarabsorbervorrichtung 13 aus der Receiverkammer 3 durch die Öffnung 11 der Dichtungsverschluss 19 in die richtige Position in der Öffnung 11 gelangen kann.

In dem in die Receiverkammer 3 eingeschobenen Zustand ist der Feststoffmediumblock 15 der Solarabsorbervorrichtung 13 vollständig in der Receiverkammer 3 angeordnet und kann mittels der konzentrierten Solarstrahlung bestrahlt werden.

Die Transporteinrichtung 17 weist einen umlaufenden Plattenabschnitt 17a auf, der in in die Receiverkammer 3 eingeschobener Position der Solarabsorbervorrichtung 13 an einem durch die Receiverkammerwandung 5 gebildeten Öffnungsrand 11a anliegt und die Öffnung 11 in dieser Position abdichtet.

Eine Arretiervorrichtung 20 hintergreift den Plattenabschnitt 17a und greift somit zur Arretierung der Solarabsorbervorrichtung 13 in der in die Receiverkammer 3 eingeschobenen Position an der Transporteinrichtung 17 an. Mittels der Arretiervorrichtung 20 kann die Solarabsorbervorrichtung 13 in der in die Receiverkammer 3 eingeschobenen Position gehalten werden. Die Vertikaltransportvorrichtung 40 kann somit von der Solarabsorbervorrichtung 13 gelöst werden, sodass die thermische Belastung der Vertikaltransportvorrichtung 40 reduziert werden kann.

Der Feststoffmediumblock 15 kann beispielsweise aus einem Redoxmaterial bestehen und porös sein. Wie aus Figuren 2a und 2b hervorgeht, ist der Feststoffmediumblock 15 quaderförmig ausgebildet. Er erstreckt sich in Höhenrichtung (Richtung Y in Figuren 2a und 2b), in Längenrichtung (X-Richtung in Figur 2b) und Breitenrichtung (Richtung Z in Figur 2a). Die maximale Erstreckung des Feststoffmediumblocks 15 in Höhenrichtung ist dabei geringer als die maximale Erstreckung in Längenrichtung. Die maximale Erstreckung in Breitenrichtung ist kleiner als die maximale Erstreckung in Höhenrichtung und die maximale Erstreckung in Längenrichtung und beträgt beispielsweise etwa 25 % der maximalen Erstreckung des Feststoffmediumblocks 15 in Höhenrichtung. Mit anderen Worten: Der Feststoffmediumblock 15 besitzt die Form einer dicken Platte, wobei eine Hauptfläche 15a gebildet ist, die in vorteilhafter Weise im in den Solarstrahlungsreceiver 1 eingeschobenen Zustand mit konzentrierter Solarstrahlung bestrahlt werden kann.

In dem Feststoffmediumblock 15 können Elemente 22 angeordnet sein, die sich in Höhenrichtung erstrecken und zur Stabilisierung des Feststoffmediumblocks 15 dienen. Ferner können zweite Elemente 23 vorgesehen sein, die sich in Breitenrichtung erstrecken und im Wesentlichen für einen verbesserten Wärmetransport in Breitenrichtung dienen. Dadurch kann eine verbesserte Durchhitzung des Feststoffmediumblocks 15 erreicht werden. Darüber hinaus kann der Feststoffmediumblock 15 so aufgebaut sein, dass ein Gastransport in Einschubrichtung unterdrückt wird, beispielsweise durch einen schichtweisen Aufbau in Höhenrichtung bei dem sich nichtporöse Schichten mit porösen Schichten abwechseln um den Gastransport beim Einschieben des Feststoffmediumblock 15 in die Receiverkammer 3 zu behindern. Der Schichtabstand kann dabei an die Breite der Receiverkammerwandung 5 an der Öffnung 11 angepasst sein um einen direkte Gastransport in und aus der Receiverkammer 3 auszuschließen.

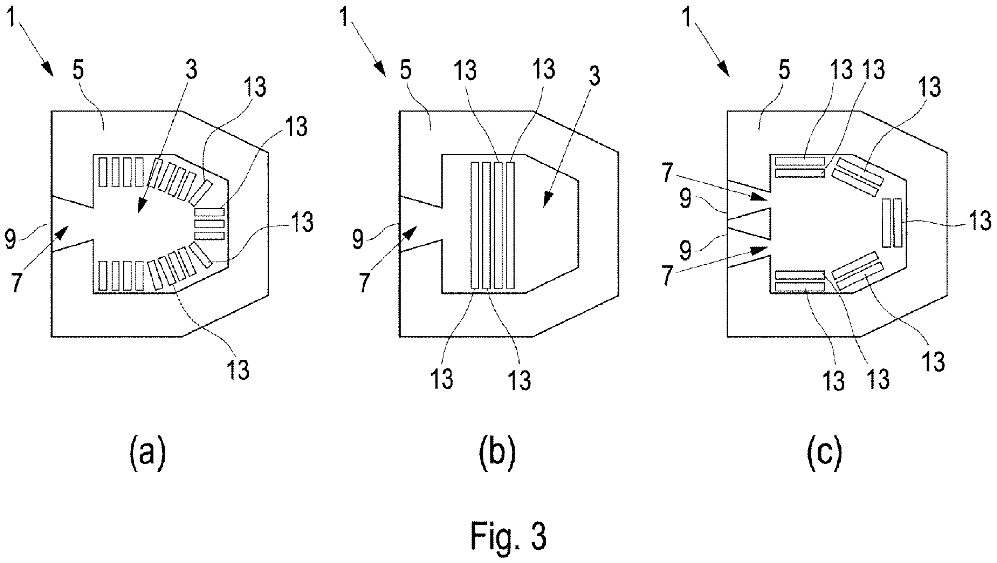

In den Figuren 3a-3c sind unterschiedliche Ausgestaltungen des erfindungsgemä-ßen Solarstrahlungsreceivers 1 dargestellt.

Die verschiedenen Solarstrahlungsreceiver 1 weisen eine Vielzahl von Öffnungen 11 auf, durch die jeweils eine Solarabsorbervorrichtung 13 eingeschoben werden kann.

In der Figur 3a ist eine Vielzahl von Solarabsorbervorrichtungen 13 entlang einer bogenförmigen Bahn in der Receiverkammer 3 angeordnet. In Figur 3b sind mehrere größere Solarabsorbervorrichtungen 13 hintereinander in Bezug auf die Einstrahlungsrichtung der konzentrierten Solarstrahlung angeordnet. Die Solarabsorbervorrichtungen 13 können somit nacheinander aus der Receiverkammer 3 entnommen und wieder eingeschoben werden, sodass in vorteilhafterweise ein kontinuierlicher Betrieb möglich ist.

In Figur 3c sind zwei Reihen von Solarabsorbervorrichtungen 13 entlang einer bogenförmigen Bahn angeordnet. Darüber hinaus weist der in Figur 3c dargestellte Solarstrahlungsreceiver 1 zwei Strahlungsöffnungen 7 auf, die jeweils durch eine transparente Scheibe 9 verschlossen sind. Mehrere Strahlungsöffnungen 7 können notwendig sein, wenn beispielsweise die Größe der transparenten Scheibe 9 aufgrund der hohen Beanspruchung und den speziellen Anforderungen hinsichtlich der Transparenz limitiert ist.

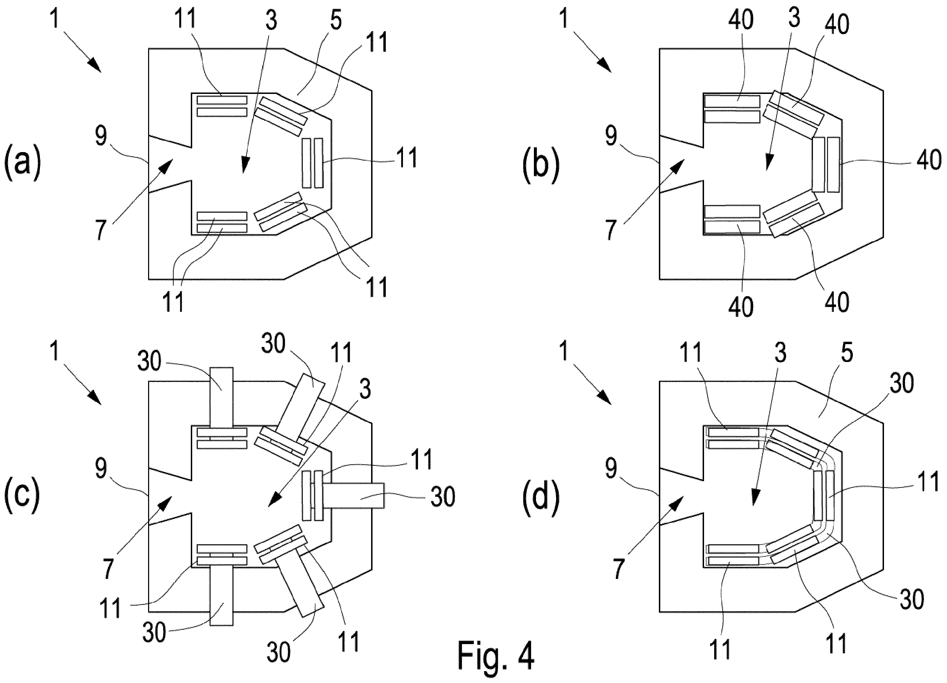

In den Figuren 4a-4d ist ein weiteres Ausführungsbeispiel eines erfindungsgemä-ßen Solarstrahlungsreceivers 1 dargestellt, wobei in den Figuren 4c und 4d eine Alternative hinsichtlich der Horizontaltransportvorrichtung 30 gezeigt ist.

Der Solarstrahlungsreceiver 1 ist in der Figur 4a ohne Solarabsorbervorrichtungen 13 gezeigt. Die Öffnungen 11 sind in zwei Reihen entlang bogenförmigen Bahnen angeordnet. Wie aus Figur 4b hervorgeht, sind mehrere Vertikaltransportvorrichtungen 40 unterhalb des Solarstrahlungsreceivers 1 angeordnet, wobei die Positionen der Vertikaltransportvorrichtungen 40 an die Positionen der Öffnungen 11 angepasst sind.

Wie aus Figuren 4c und d hervorgeht, verlaufen mehrere Horizontaltransportvorrichtungen 30 bis unter die Öffnungen 11, sodass die Solarabsorbervorrichtungen 13 mittels der Horizontaltransportvorrichtungen 30 unterhalb der Öffnungen 11 und auf den Vertikaltransportvorrichtungen 40 positioniert werden können. In Figur 4c sind Horizontaltransportvorrichtungen 30 dargestellt, die jeweils zwei nebeneinanderliegende Öffnungen bedienen können.

In Figur 4d ist ein alternatives Ausführungsbeispiel dargestellt, bei dem die Horizontaltransportvorrichtungen 30 die Solarabsorbervorrichtungen 13 entlang einer bogenförmigen Bahn transportieren können, sodass alle in einer Reihe auf einer bogenförmigen Bahn liegenden Öffnungen 11 durch eine Horizontaltransportvorrichtung 30 bedient werden können.

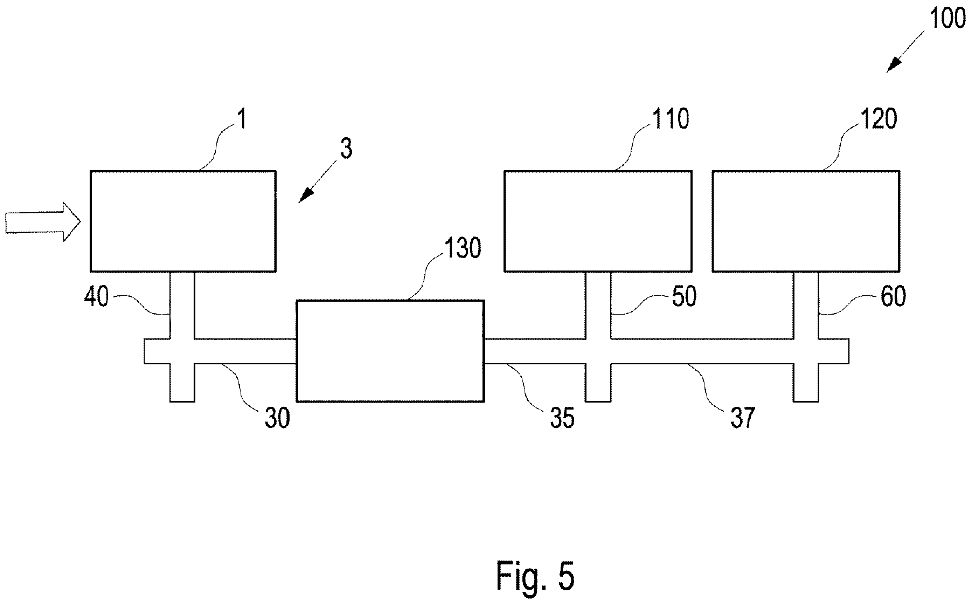

In Figur 5 ist ein erfindungsgemäßes Reaktorsystem 100 schematisch in einer Prinzipskizze dargestellt.

Das Reaktorsystem 100 weist einen erfindungsgemäßen Receiver 1 mit der Receiverkammer 3 und einer oder mehreren Vertikaltransportvorrichtungen 40 auf. Ferner weist das Reaktorsystem 100 eine Reaktorkammer 110, eine Solarabsorbervorrichtungsspeicher 120 und ein Wärmeübertragungssystem 130 auf. Die einen Feststoffmediumblock aus einem Redoxmaterial aufweisenden Solarabsorbervorrichtungen werden in dem Solarstrahlungsreceiver 1 mittels Solarstrahlung erhitzt und reduziert. Anschließend werden diese durch das Wärmeübertragungssystem 130 transportiert, wobei eine Wärmeübertragung auf kältere Solarabsorbervorrichtungen erfolgt. Danach werden die reduzierten und abgekühlten Solarabsorbervorrichtungen in die Reaktorkammer 110 eingesetzt und Wasserdampf ausgesetzt, wodurch aufgrund der Oxidierung des Redoxmaterials durch den Sauerstoff des Wasserdampfs Wasserstoff entsteht.

Die Horizontaltransportvorrichtung 30 kann die Solarabsorbervorrichtungen von der Vertikaltransportvorrichtung 40 zu dem Wärmeübertragungssystem 130 transportieren bzw. Solarabsorbervorrichtungen von dem Wärmeübertragungssystem 130 zu der Vertikaltransportvorrichtung 40. Für den Transport der Solarabsorbervorrichtungen in die Reaktorkammer 110 kann eine zweite Vertikaltransportvorrichtung 50 vorgesehen sein. Über eine zweite Horizontaltransportvorrichtung 35 können die Solarabsorbervorrichtungen zu der zweiten Vertikaltransportvorrichtung transportiert und von dieser wieder weg transportiert werden.

Ferner kann ein Solarabsorbervorrichtungsspeicher 120 vorgesehen sein, in dem Solarabsorbervorrichtungen zwischengelagert bzw. vorgehalten werden können. Der Solarabsorbervorrichtungsspeicher 120 kann über eine dritte Vertikaltransportvorrichtung 60 bedient werden. Zu der dritten Vertikaltransportvorrichtung 60 kann eine dritte Horizontaltransportvorrichtung 37 Solarabsorbervorrichtungen transportieren bzw. von dieser weg transportieren.

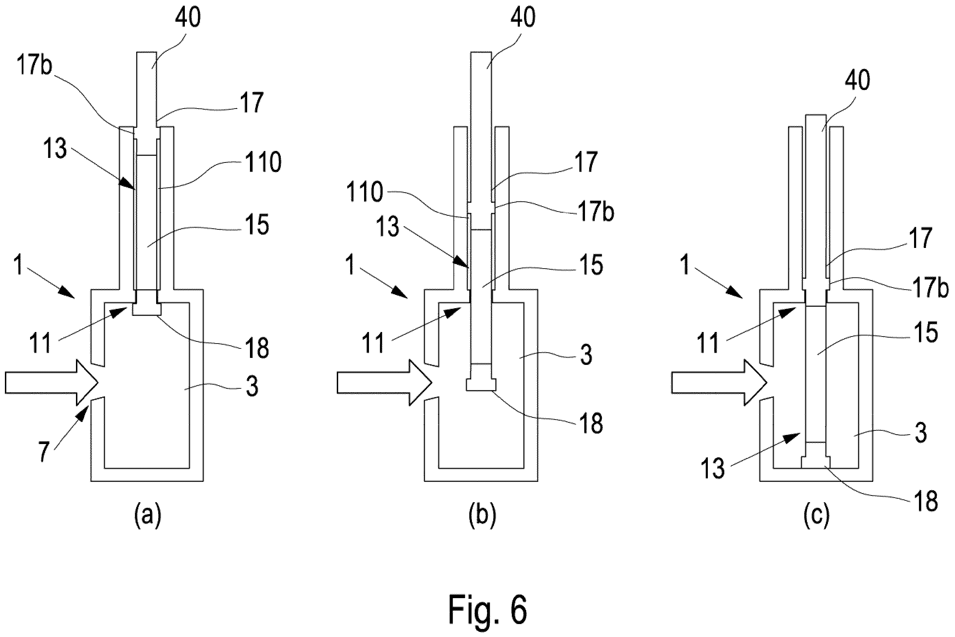

In den Figuren 6a-6c sind schematische Darstellungen einer zweiten Ausführungsform eines erfindungsgemäßen Solarstrahlungsreceivers 1 gezeigt.

In dem gezeigten Ausführungsbeispiel ist die Reaktorkammer 3 direkt an den Solarstrahlungsreceiver 1 anschließend angeordnet ist. Die Solarabsorbervorrichtung 13 wird mittels der Vertikaltransportvorrichtung 40 aus dem Solarstrahlungsreceiver direkt in die Reaktorkammer transportiert. Die Reaktorkammer 110 ist oberhalb des Solarstrahlungsreceivers 1 angeordnet. Die Öffnung 11 der Receiverkammer 3 mündet direkt in die Reaktorkammer 110.

In den Figuren 6a-6c ist die Solarabsorbervorrichtung 13 in verschiedenen Positionen gezeigt. In Figur 6a ist die Solarabsorbervorrichtung 13 mit dem Feststoffmediumblock 15 vollständig in der Reaktorkammer 110 gezeigt. In Figur 6c ist die Solarabsorbervorrichtung 13 mit dem Feststoffmediumblock 15 vollständig in der Receiverkammer 3 gezeigt.

Die Transporteinrichtung 17, an dem der Feststoffmediumblock 15 angeordnet ist weist eine Dichtung 17b auf, die je nach Position der Solarabsorbervorrichtung 13 die Reaktorkammer 110 oder die Receiverkammer 3 abdichtet. Zusätzlich ist an einer der Transporteinrichtung 17 gegenüberliegenden Seite des Feststoffmediumblocks 15 eine weitere Dichtung 18 angeordnet, die in in die Reaktorkammer 110 eingefahrener Stellung des Feststoffmediumblocks (Fig. 6a) eine Abdichtung der Reaktorkammer 110 gegenüber der Receiverkammer 3 sicherstellt.

Grundsätzlich können auch entsprechende Dichtungen an der Receiverkammer 3, insbesondere der Öffnung 11 und/oder an der Reaktorkammer 110 vorgesehen sein. Es können auch aktive Dichtungen verwendet werden. Beispielsweise kann die mindestens eine Öffnung 11 die Receiverkammer 3 und die Reaktorkammer 110 verbinden, wobei eine Dichtung als eine Art Schleuse an der Öffnung 11 angeordnet ist. Wenn der Feststoffmediumblock 15 in die Reaktorkammer 110 verschoben ist, kann die Dichtung dann beispielsweise die Öffnung 11 vollständig verschließen.

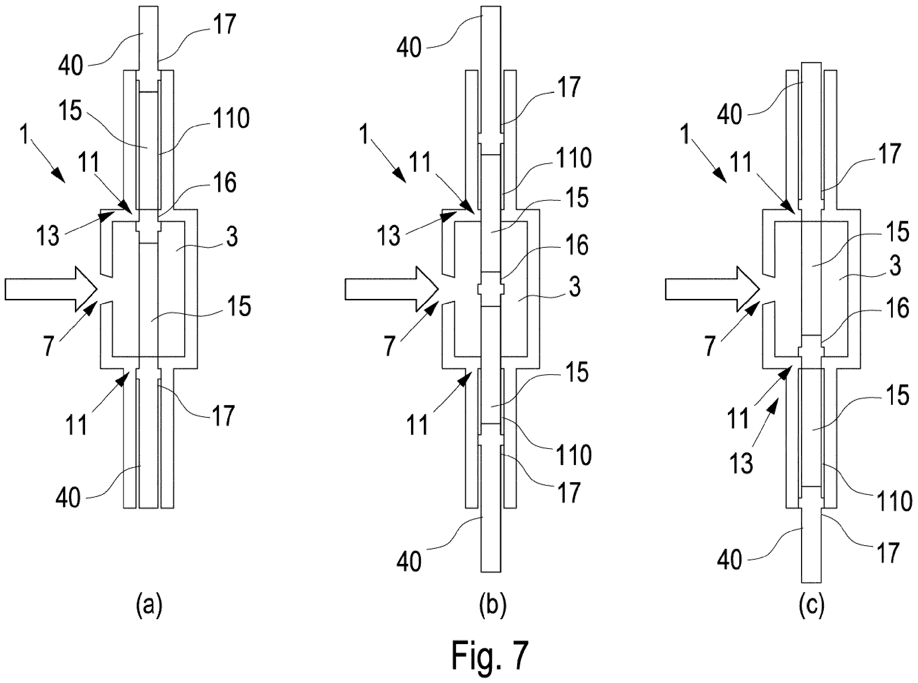

In den Figuren 7a-7c sind schematische Darstellungen einer dritten Ausführungsform eines erfindungsgemäßen Solarstrahlungsreceivers 1 gezeigt.

In dem in den Figuren 7a-7c dargestellten Ausführungsbeispiel weist die Solarabsorbervorrichtung 13 zwei übereinander angeordnete Feststoffblöcke 15 auf. Die Transporteinrichtung 17 ist zweigeteilt. Oberhalb und unterhalb der Receiverkammer 3 sind jeweils eine Reaktorkammer 110 angeordnet, die zueinander ausgerichtet sind und die den Feststoffblöcken 15 zugeordnet sind. Mittels einer Transporteinrichtung 40 werden die Feststoffblöcke 15 verschoben, so dass stets ein Feststoffblock 15 in der Receiverkammer 3 angeordnet ist und ein Feststoffblock 15 alternierend in einer der Reaktorkammern 110. Zwischen den Feststoffblöcken 15 kann eine Verbindungseinrichtung 16 angeordnet sein. Mittels der Verbindungseinrichtung 16 kann auch eine Abdichtung an den Öffnungen 11 der Receiverkammer 3 erfolgen.

In den Figuren 7a-7c ist die Solarabsorbervorrichtung 13 in verschiedenen Positionen gezeigt. In Figur 7a ist die Solarabsorbervorrichtung 13 mit dem oberen Feststoffmediumblock 15 vollständig in der oberen Reaktorkammer 110 gezeigt, wobei der untere Feststoffmediumblock 15 in der Receiverkammer 3 angeordnet ist. In Figur 7c ist die Solarabsorbervorrichtung 13 mit dem unteren Feststoffmediumblock 15 vollständig in der unteren Reaktorkammer 110 gezeigt wobei der obere Feststoffmediumblock 15 in der Receiverkammer 3 angeordnet ist.

Die zuvor in Bezug auf die Figuren 6a bis 7c beschriebenen Ausführungsformen können auch mehrere Solarabsorbervorrichtungen 13 mit entsprechen zugeordneten Reaktorkammern aufweisen. Beispielsweise können die Solarabsorbervorrichtungen 13 in der in Figur 3c dargestellten Anordnung vorgesehen sein. Dabei kann der Solarstrahlungsreceiver 1 auch mehrere Strahlungsöffnungen 7 aufweisen.

### Bezugszeichenliste

- 1: Solarstrahlungsreceiver
- 3: Receiverkammer
- 5: Receiverkammerwandung
- 7: Strahlungsöffnung
- 9: transparente Scheibe
- 11: Öffnung
- 11a: Öffnungsrand
- 11b: Begrenzungswände
- 13: Solarabsorbervorrichtung
- 13a: Zentriervorsprung
- 15: Feststoffmediumblock
- 15a: Hauptfläche
- 16: Verbindungseinrichtung
- 17: Transporteinrichtung
- 17a: Plattenabschnitt
- 17b: Dichtung
- 18: weitere Dichtung
- 19: Dichtungsverschluss
- 19a: Zentrieraussparung
- 19b: Umfangswände
- 20: Arretiervorrichtung
- 21: Aussparung
- 22: Elemente
- 23: zweite Elemente
- 30: Horizontaltransportvorrichtung
- 35: zweite Horizontaltransportvorrichtung
- 37: dritte Horizontaltransportvorrichtung
- 40: Vertikaltransportvorrichtung
- 50: zweite Vertikaltransportvorrichtung
- 60: dritte Vertikaltransportvorrichtung
- 100: Reaktorsystem
- 110: Reaktorkammer
- 120: Solarabsorbervorrichtungsspeicher
- 130: Wärmeübertragungssystem

## Patentansprüche

1. Solarstrahlungsreceiver (1) mit einer Receiverkammer (3) mit mindestens einer Strahlungsöffnung (7), durch die konzentrierte Solarstrahlung in die Receiverkammer (3) einleitbar ist, mit mindestens einer Solarabsorbervorrichtung (13), die mindestens einen Feststoffmediumblock (15) aufweist, und mit mindestens einer Öffnung (11) wobei die Solarabsorbervorrichtung (13) eine Transporteinrichtung (17) aufweist, wobei der mindestens eine Feststoffmediumblock (15) an der Transporteinrichtung (17) befestigt ist, **dadurch gekennzeichnet, dass** die mindestens eine Solarabsorbervorrichtung (13) durch die mindestens eine Öffnung (11) eingeschoben wird, so dass der mindestens eine Feststoffmediumblock (15) in der Receiverkammer (3) angeordnet ist, und entnommen wird.

2. Solarstrahlungsreceiver nach Anspruch 1, **dadurch gekennzeichnet, dass** die mindestens eine Strahlungsöffnung (7) mit einer für die Solarstrahlung transparenten Scheibe (9) verschlossen ist.

3. Solarstrahlungsreceiver nach Anspruch 1 oder 2, **gekennzeichnet durch** mindestens eine Vertikaltransportvorrichtung (40), wobei die mindestens eine Öffnung (11) nach unten gerichtet ist und die mindestens eine Vertikaltransportvorrichtung (40) die mindestens eine Solarabsorbervorrichtung (13) in vertikaler Richtung von unten in die Receiverkammer (3) einschiebt und von unten aus dieser entnimmt,
und/oder durch mehrere Öffnungen (11) und mehrere Solarabsorbervorrichtungen (13), wobei jeweils eine Solarabsorbervorrichtung (13) durch eine der Öffnungen (11) in die Receiverkammer (3) eingeschoben und aus dieser entnommen wird.

4. Solarstrahlungsreceiver nach Anspruch 3, **gekennzeichnet durch** mehrere Vertikaltransportvorrichtungen (40), wobei jeder Öffnung (11) eine Vertikaltransportvorrichtung (40) zugeordnet ist.

5. Solarstrahlungsreceiver nach einem der Ansprüche 1 bis 4 **gekennzeichnet durch** eine an der mindestens einen Öffnung (11) oder an jeder Öffnung (11) angeordneten Arretiervorrichtung (20), die eine durch die Öffnung (11) in die Receiverkammer (3) eingeschobene Solarabsorbervorrichtung (13) in der eingeschobenen Position arretiert,
wobei vorzugsweise die Arretiervorrichtung (20) zur Arretierung an der Transporteinrichtung (17) angreift.

6. Solarstrahlungsreceiver nach einem der Ansprüche 1 bis 5, **dadurch gekennzeichnet, dass** die mindestens eine Öffnung (11) eine an die Form der Transporteinrichtung (17) angepasste Form aufweist.

7. Solarstrahlungsreceiver nach einem der Ansprüche 1 bis 6, **dadurch gekennzeichnet, dass** die Transporteinrichtung (17) der Solarabsorbervorrichtung (13) einen seitlich über den Feststoffmediumblock (15) vorstehenden Plattenabschnitt (17a) aufweist und die mindestens eine Öffnung (11) durch einen Öffnungsrand (11a) begrenzt ist, der durch eine Receiverkammerwandung (5) gebildet ist, wobei in der in die Receiverkammer (3) eingeschobenen Position der Solarabsorbervorrichtung (13) der vorstehende Plattenabschnitt (17a) an dem Öffnungsrand (11a) anliegt, wobei vorzugsweise die Arretiervorrichtung (20) zur Arretierung den Plattenabschnitt (17a) hintergreift.

8. Solarstrahlungsreceiver nach Anspruch 7, **dadurch gekennzeichnet, dass** der Plattenabschnitt (17a) umlaufend ausgebildet ist.

9. Solarstrahlungsreceiver nach einem der Ansprüche 1 bis 8, **dadurch gekennzeichnet, dass** die mindestens eine Öffnung (11) Dichtungsverschluss (19) aufweist, der in die Öffnung (11) eingesetzt ist, wobei beim Einschieben der mindestens einen Solarabsorbervorrichtung **(13) in die Öff**nung (11) der Dichtungsverschluss (19) entfernt wird, wobei vorzugsweise die Solarabsorbervorrichtung (13) den Dichtungsverschluss (19) aus der Öffnung (11) drückt,
wobei vorzugsweise die mindestens eine Solarabsorbervorrichtung (13) einen Zentriervorsprung (13a) und der Dichtungsverschluss (19) eine Zentrieraussparung (19a) aufweist, wobei der Zentriervorsprung (13a) an die Zentrieraussparung (19a) angepasst ist.

10. Solarstrahlungsreceiver nach Anspruch 9, **dadurch gekennzeichnet, dass** in der Receiverkammer (3) der mindestens einen Öffnung (11) gegenüberliegend mindestens eine Aussparung (21) angeordnet ist, wobei die Solarabsorbervorrichtung (13) beim Einschieben in die Receiverkammer (3) den Dichtungsverschluss (19) in die Aussparung (21) schiebt, und/oder
dass der Dichtungsverschluss (19) einen sich verjüngenden Querschnitt aufweist, wobei schräg verlaufende Umfangswände (19b) gebildet sind, die im in die Öffnung (11) eingesetzten Zustand des Dichtungsverschlusses (19) an Begrenzungswänden (11b) der Öffnung (11) anliegen.

11. Solarstrahlungsreceiver nach einem der Ansprüche 3 bis 10 **gekennzeichnet, durch** eine Horizontaltransportvorrichtung (30), die die mindestens eine Solarabsorbervorrichtung (13) zu der Vertikaltransportvorrichtung (40) transportiert.

12. Solarstrahlungsreceiver nach einem der vorangegangenen Ansprüche, **dadurch gekennzeichnet, dass** der Feststoffmediumblock (15) quer zu einer Einschubrichtung in die Receiverkammer (3) verlaufende Sperrschichten aufweist, die einen Gastransport innerhalb des Feststoffmediumblocks (15) in Einschubrichtung unterdrückt.

13. Reaktorsystem (100) mit einem Solarstrahlungsreceiver (1) nach einem der Ansprüche 1 bis 12, mit einer Reaktorkammer (110), wobei mindestens eine zweite Vertikaltransportvorrichtung (50) die mindestens eine Solarabsorbervorrichtung (13) in die Reaktorkammer (110) in vorzugsweise vertikaler Richtung einschiebt und aus dieser entnimmt.

14. Reaktorsystem nach Anspruch 13, **gekennzeichnet durch** einen Solarabsorbervorrichtungsspeicher (120) zur Aufnahme mehrerer Solarabsorbervorrichtungen (13),
wobei vorzugsweise mindestens eine dritte Vertikaltransportvorrichtung (60) die Solarabsorbervorrichtungen (13) in den Solarabsorbervorrichtungsspeicher (120) in vorzugsweise vertikaler Richtung einschiebt und aus diesem entnimmt.

15. Reaktorsystem nach einem der Ansprüche 13 oder 14 **gekennzeichnet, durch** ein Wärmeübertragungssystem (130) mit einer Wärmeübertragungskammer mit einer Eintrittsöffnung und einer Austrittsöffnung wobei die Solarabsorbervorrichtungen (13) in zwei Reihen gegenläufig durch die Wärmeübertragungskammer transportiert werden, und/oder wobei Horizontaltransportvorrichtungen (30,35) die mindestens eine Vertikaltransportvorrichtung (40), die mindestens eine zweite Vertikaltransportvorrichtung (50) und die mindestens eine dritte Vertikaltransportvorrichtung (60) verbinden.

## Claims

1. Solar radiation receiver (1) having a receiver chamber (3) having at least one radiation opening (7) through which concentrated solar radiation can be introduced into the receiver chamber (3), having at least one solar absorber device (13) which has at least one solid medium block (15) and having at least one opening (11), wherein the solar absorber device comprises a transport device (17), wherein the at least one sold medium block (15) is fastened to the transport device (17),
**characterized in that** the at least one solar absorber device (13) is inserted through the at least one opening (11) such that the at least one solid medium block (15) is arranged in the receiver chamber (3), and is removed through the same.

2. Solar radiation receiver according to claim 1, **characterized in that** the at least one radiation opening (7) is closed with a disc (9) transparent to solar radiation.

3. Solar radiation receiver according to claim 1 or 2, **characterized by** at least one vertical transport device (40), wherein the at least one opening (11) is directed downward and the at least one vertical transport device (40) inserts the at least one solar absorber device (13) into the receiver chamber (3) in the vertical direction from below and removes the same from below,
and/or by a plurality of openings (11) and a plurality of solar absorber openings (13), wherein one solar absorber device (13) is inserted into and removed from the receiver chamber (3) through one of the openings (11), respectively.

4. Solar radiation receiver according to claim 3, **characterized by** a plurality of vertical transport devices (40), wherein each opening (11) has a vertical transport device (40) assigned thereto.

5. Solar radiation receiver according to one of claims 1 to 4, **characterized by** a locking device (20) arranged at the at least one opening (11) or at each opening (11), by which device a solar absorber device (13) inserted into the receiver chamber (3) via the opening (11) is locked in the inserted position, the locking device (20) preferably engaging the transport means (17) for locking.

6. Solar radiation receiver according to one of claims 1 to 5, **characterized in that** the at least one opening (11) has a shape adapted to the shape of the transport device (17).

7. Solar radiation receiver according to one of claims 1 to 6, **characterized in that** the transport means (17) of the solar absorber device (13) comprises a plate section (17a) protruding laterally beyond the solid medium block (15) and the at least one opening (11) is limited by an opening edge (11a) formed by a receiver chamber wall (5), wherein, when the solar absorber device (13) is in the position inserted into the receiver chamber (3), the protruding plate section (17a) abuts the opening edge (11a), the locking device (20) preferably engaging behind the plate section (17a) for locking.

8. Solar radiation receiver according to claim 7, **characterized in that** the plate section (17a) is designed to extend circumferentially.

9. Solar radiation receiver according to one of claims 1 to 8, **characterized in that** the at least one opening (11) comprises a sealing closure (19) set into the opening (11), wherein upon the insertion of the at least one solar absorber device (13) into the opening (11), the sealing closure (19) is removed, wherein the solar absorber device (13) preferably pushes the sealing closure (19) out of the opening (11)
wherein preferably the at least one solar absorber device (13) comprises a centering protrusion (13a) and the sealing closure (19) comprises a centering recess (19a), wherein the centering protrusion (13a) is adapted to the centering recess (19a).

10. Solar radiation receiver according to claim 9, **characterized in that** at least one recess (21) is arranged in the receiver chamber (3) opposite the at least one opening (11), wherein the solar absorber device (13) pushes the sealing closure (19) into the recess (21) upon insertion into the receiver chamber (3), and/or
the sealing closure (19) has a tapering cross section, wherein inclined circumferential walls (19b) are formed which, when the sealing closure (19) is in the state inserted in the opening (11), abut against the limiting walls (11b) of the opening (11).

11. Solar radiation receiver according to one of claims 3 to 10, **characterized by** a horizontal transport device (30) which transports the at least one solar absorber device (13) to the vertical transport device (40).

12. Solar radiation receiver according to one of the preceding claims, **characterized in that** the solid medium block (15) comprises barrier layers extending transversely to a direction of insertion into the receiver chamber (3), which suppress a gas transport within the solid medium block (15) in the direction of insertion.

13. Reactor system (100) with a solar radiation receiver (1) according to one of claims 1 to 12, comprising a reactor chamber (110), wherein at least one second vertical transport device (50) inserts the at least one solar absorber device (13) into the reactor chamber (110), preferably in the vertical direction, and removes the device from the same.

14. Reactor system according to claim 13, **characterized by** a solar absorber device storage (120) for receiving a plurality of solar absorber devices (13), wherein preferably at least one third vertical transport device (60) inserts the solar absorber devices (13) into the solar absorber device storage (120), preferably in the vertical direction, and removes the devices from the same.

15. Reactor system according to one of claims 13 or 14, **characterized by** a heat transfer system (130) having a heat transfer chamber with an inlet opening and an outlet opening, wherein the solar absorber devices (13) are moved in two rows in opposite directions through the heat transfer chamber,
and/or wherein horizontal transport devices (30, 35) connect the at least one vertical transport device (40), the at least one vertical transport device (50) and the at least one third vertical transport device (60).

## Revendications

1. Récepteur de rayonnement solaire (1) comportant une chambre de récepteur (3) comportant au moins une ouverture de rayonnement (7) à travers laquelle du rayonnement solaire concentré peut être introduit dans la chambre de récepteur (3), comportant au moins un dispositif d'absorption solaire (13) qui présente au moins un bloc de substance solide (15), et comportant au moins une ouverture (11), dans lequel le dispositif d'absorption solaire (13) présente un moyen de transport (17), dans lequel l'au moins un bloc de substance solide (15) est fixé au moyen de transport (17), **caractérisé en ce que** l'au moins un dispositif d'absorption solaire (13) est inséré à travers l'au moins une ouverture (11), de sorte que l'au moins un bloc de substance solide (15) est disposé dans la chambre de récepteur (3), et est retiré.

2. Récepteur de rayonnement solaire selon la revendication 1,
**caractérisé en ce que** l'au moins une ouverture de rayonnement (7) est fermée par une vitre (9) transparente pour le rayonnement solaire.

3. Récepteur de rayonnement solaire selon la revendication 1 ou 2,
**caractérisé par** au moins un dispositif de transport vertical (40), dans lequel l'au moins une ouverture (11) est orientée vers le bas et l'au moins un dispositif de transport vertical (40) insère l'au moins un dispositif d'absorption solaire (13) dans la chambre de récepteur (3) dans le sens vertical par le bas et le retire de celle-ci par le bas,
**et/ou par** plusieurs ouvertures (11) et plusieurs dispositifs d'absorption solaire (13), dans lequel un dispositif d'absorption solaire (13) est respectivement inséré dans la chambre de récepteur (3) et retiré de celle-ci à travers l'une des ouvertures (11).

4. Récepteur de rayonnement solaire selon la revendication 3,
**caractérisé par** plusieurs dispositifs de transport vertical (40), dans lequel un dispositif de transport vertical (40) est associé à chaque ouverture (11).

5. Récepteur de rayonnement solaire selon l'une des revendications 1 à 4, **caractérisé par** un dispositif de blocage (20) disposé sur l'au moins une ouverture (11) ou sur chaque ouverture (11), lequel dispositif de blocage bloque, dans la position insérée, un dispositif d'absorption solaire (13) inséré à travers l'ouverture (11) dans la chambre de récepteur (3),
dans lequel le dispositif de blocage (20) vient en prise de préférence avec le moyen de transport (17) pour le blocage.

6. Récepteur de rayonnement solaire selon l'une des revendications 1 à 5, **caractérisé en ce que** l'au moins une ouverture (11) présente une forme adaptée à la forme du moyen de transport (17).

7. Récepteur de rayonnement solaire selon l'une des revendications 1 à 6, **caractérisé en ce que** le moyen de transport (17) du dispositif d'absorption solaire (13) présente une section de plaque (17a) faisant saillie latéralement au-dessus du bloc de substance solide (15), et l'au moins une ouverture (11) est délimitée par un bord d'ouverture (11a) qui est formé par une paroi (5) de chambre de récepteur, dans lequel la section de plaque (17a) en saillie s'appuie contre le bord d'ouverture (11a) dans la position du dispositif d'absorption solaire (13) inséré dans la chambre de récepteur (3), dans lequel le dispositif de blocage (20) vient en prise par l'arrière de préférence avec la section de plaque (17a) pour le blocage.

8. Récepteur de rayonnement solaire selon la revendication 7,
**caractérisé en ce que** la section de plaque (17a) est réalisée de manière circonférentielle.

9. Récepteur de rayonnement solaire selon l'une des revendications 1 à 8, **caractérisé en ce que** l'au moins une ouverture (11) présente un bouchon d'étanchéité (19) qui est mis en place dans l'ouverture (11), dans lequel le bouchon d'étanchéité (19) est retiré lors de la mise en place de l'au moins un dispositif d'absorption solaire (13) dans l'ouverture (11), dans lequel, de préférence, le dispositif d'absorption solaire (13) pousse le bouchon d'étanchéité (19) hors de l'ouverture (11),
dans lequel, de préférence, l'au moins un dispositif d'absorption solaire (13) présente une saillie de centrage (13a) et le bouchon d'étanchéité (19) présente un évidement de centrage (19a), dans lequel la saillie de centrage (13a) est adaptée à l'évidement de centrage (19a).

10. Récepteur de rayonnement solaire selon la revendication 9,
**caractérisé en ce qu'au** moins un évidement (21) est disposé dans la chambre de récepteur (3) en face de l'au moins une ouverture (11), dans lequel le dispositif d'absorption solaire (13) pousse le bouchon d'étanchéité (19) dans l'évidement (21) lors de son insertion dans la chambre de récepteur (3), **et/ou**
**en ce que** le bouchon d'étanchéité (19) présente une section transversale qui se rétrécit, dans lequel des parois périphériques (19b) s'étendant en oblique sont formées, lesquelles s'appuient contre des parois de délimitation (11b) de l'ouverture (11) lorsque le bouchon d'étanchéité (19) est mise en place dans l'ouverture (11).

11. Récepteur de rayonnement solaire selon l'une des revendications 3 à 10, **caractérisé par** un dispositif de transport horizontal (30) qui transporte l'au moins un dispositif d'absorption solaire (13) vers le dispositif de transport vertical (40).

12. Récepteur de rayonnement solaire selon l'une des revendications précédentes, **caractérisé en ce que** le bloc de substance solide (15) présente des couches barrières s'étendant dans la chambre de récepteur (3), transversalement à une direction d'insertion, lesquelles couches barrières suppriment un transport de gaz à l'intérieur du bloc de substance solide (15), dans la direction d'insertion.

13. Système de réacteur (100) comportant un récepteur de rayonnement solaire (1) selon l'une des revendications 1 à 12, comportant une chambre de réacteur (110), dans lequel au moins un deuxième dispositif de transport vertical (50) insère l'au moins un dispositif d'absorption solaire (13) dans la chambre de réacteur (110), dans une direction de préférence verticale, et le retire de celle-ci.

14. Système de réacteur selon la revendication 13, **caractérisé par** un stockage (120) de dispositif d'absorption solaire destiné à recevoir plusieurs dispositifs d'absorption solaire (13),
dans lequel, de préférence, au moins un troisième dispositif de transport vertical (60) insère les dispositifs d'absorption solaire (13) dans le stockage (120) de dispositifs d'absorption solaire, dans une direction de préférence verticale, et les retire de celui-ci.

15. Système de réacteur selon l'une des revendications 13 ou 14,
**caractérisé par** un système de transfert de chaleur (130) comportant une chambre de transfert de chaleur comportant une ouverture d'entrée et une ouverture de sortie, dans lequel les dispositifs d'absorption solaire (13) sont transportés en deux rangées en sens inverse à travers la chambre de transfert de chaleur,
et/ou dans lequel des dispositifs de transport horizontal (30, 35) relient l'au moins un dispositif de transport vertical (40), l'au moins un deuxième dispositif de transport vertical (50) et l'au moins un troisième dispositif de transport vertical (60).
